# EUROPÄISCHE PATENTANMELDUNG

(11) **EP 0 928 657 A1**
(43) Veröffentlichungstag der Anmeldung: **14.07.1999**
(21) Anmeldenummer: 97811022.9
(22) Anmeldetag: 24.12.1997
(51) Int. Cl.: B23G 5/06, B23G 1/16

(54) **Gewindebohrer**

(71) Anmelder: FRAISA SA, 4512 Bellach (CH)
(72) Erfinder: Nägelin, Thomas, 4433 Ramlingsburg (CH)
(74) Vertreter: Patentanwälte Breiter + Wiedmer AG

(57) **Zusammenfassung**

Ein für den Einsatz auf Maschinen mit synchronisiertem Spindelantrieb vorgesehener Gewindebohrer weist einen Schneidteil auf, dessen Schneidgeometrie so ausgestaltet ist, dass der Gewindebohrer zur Bearbeitung verschiedener Materialien mit unterschiedlicher Zugfestigkeit (Rm) und Bruchdehnung (A5) eingesetzt werden kann. Während für verschiedene Werkstoffkategorien jeweils ein zugehöriger Gewindebohrer herkömmlicher Art mit entsprechendem Einsatzbereich (A,B,C,D,E,F) und entsprechend angepasster Schneidgeometrie bereitgestellt werden muss, ist der erfindungsgemässe Gewindebohrer in einem die verschiedenen individuellen Werkstoffkategorien überdeckenden Bereich (X) universell einsetzbar.

## Beschreibung

Die Erfindung betrifft einen Gewindebohrer mit einem Schneidteil und eine an einem Schaft angeordnete Spannfläche zum Einspannen in eine Spindel einer Bearbeitungsmaschine. Im Rahmen der Erfindung liegt auch ein Verfahren zum Schneiden eines Gewindes sowie eine Verwendung des Gewindebohrers.

Herkömmliche Gewindebohrer sind selbstführende Bearbeitungswerkzeuge, deren Schneidgeometrie an du zu bearbeitende Material angepasst ist. Die Werkstoffe werden in verschiedene Kategorien eingeteilt, wobei zur Bearbeitung von Werkstoffen unterschiedlicher Werkstoffkategorien jeweils ein spezieller Gewindeschneider mit einer jeder Werkstoffkategorie zugeordneten eigenen Schneidgeometrie benötigt wird. Selbstführende Gewindebohrer werden üblicherweise auf Maschinen mit Längenausgleichsfuttern eingesetzt.

Der Erfindung liegt die Aufgabe zugrunde, einen einfachen und kostengünstigen Weg für das Schneiden von Gewinden in unterschiedliche Werkstoffe aufzuzeigen.

Zur erfindungsgemässen Lösung der Aufgabe führt bei einem Gewindebohrer der eingangs genannten Art, dass der Schneidteil des Gewindebohrers für den Einsatz auf Maschinen mit synchronisiertem Spindelantrieb eine zur Bearbeitung verschiedener Materialien mit unterschiedlicher Zugfestigkeit und Bruchdehnung angepasste einheitliche Schneidgeometrie aufweist.

Der erfindungsgemässe Gewindebohrer ist für Maschinen mit synchronisiertem Spindelantrieb (rigid tapping) ausgelegt. Bei dieser Technik wird die Axialführung des Bearbeitungswerkzeuges von der Spindel übernommen. Die Schneidgeometrie des Gewindebohrers kann dadurch stärker auf den Zerspanungsprozess ausgerichtet werden, was die Bearbeitung verschiedener Materialien mit einer einzigen Schneidgeometrie erlaubt. Da die Führung des Gewindebohrers vollständig von der Maschine übernommen wird, sind keine speziellen Spannmittel für den Längenausgleich mehr nötig.

Bevorzugt ist die Spannfläche als Seitenspannfläche ausgestaltet, wobei der Schaft mit der Seitenspannfläche zweckmässigerweise nach DIN 1835 B ausgeführt ist. Ein wesentlicher Vorteil dieser Einspannart liegt darin, dass sie dem üblichen Einspannen von auf CNC-Maschinen eingesetzten Fräswerkzeugen entspricht und somit die erfindungsgemässen Gewindebohrer auf denselben CNC-Maschinen mit rigid tapping eingesetzt werden können wie die Fräswerkzeuge.

Bevorzugt ist der Gewindebohrer aus einem Hartmetall oder aus einem Hochleistungsschnellstahl gefertigt, wobei die Herstellung auf pulvermetallurgischem Weg zu einer extremen Zähigkeit führt.

Zumindest der Schneidteil des Gewindebohrers kann zur Erhöhung seiner Verschleissfestigkeit eine Hartstoffbeschichtung aufweisen. Bewährte Hartstoffbeschichtungen sind beispielsweise TiN, TiCN oder TiAlCN.

Das erfindungsgemässe Verfahren zum Schneiden eines Gewindes mit einem in einer Spindel einer Bearbeitungsmaschine eingespannten Gewinderbohrer zeichnet sich dadurch aus, dass der Schneidteil des Gewindebohrers eine zur Bearbeitung verschiedener Materialien mit unterschiedlicher Zugfestigkeit und Bruchdehnung angepasste einheitliche Schneidgeometrie aufweist und das Schneiden des Gewindes auf einer Maschine mit synchronisiertem Spindelantrieb durchgeführt wird.

Der grosse Vorteil des erfindungsgemässen Gewindebohrers liegt darin, dass er auf CNC-Maschinen mit synchronisiertem Spindelantrieb zur Bearbeitung verschiedener Materialien mit unterschiedlicher Zugfestigkeit und Bruchdehnung eingesetzt werden kann, d.h. ein einheitlicher, für die meisten Werkstoffkategorien universell einsetzbarer Gewindebohrer mit einer einzigen Schneidgeometrie kann an Stelle der nach dem Stand der Technik für jede Werkstoffkategorie eigens benötigten Gewindebohrer mit an die zu bearbeitenden Materialien jeweils speziell angepasster Schneidgeometrie verwendet werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: die Seitenansicht eines Gewindebohrers;
- - Fig. 2: die Einsatzbereiche verschiedener Gewindebohrer in Abhängigkeit der Zugfestigkeit und Bruchdehnung des zu bearbeitenden Werkstoffes.

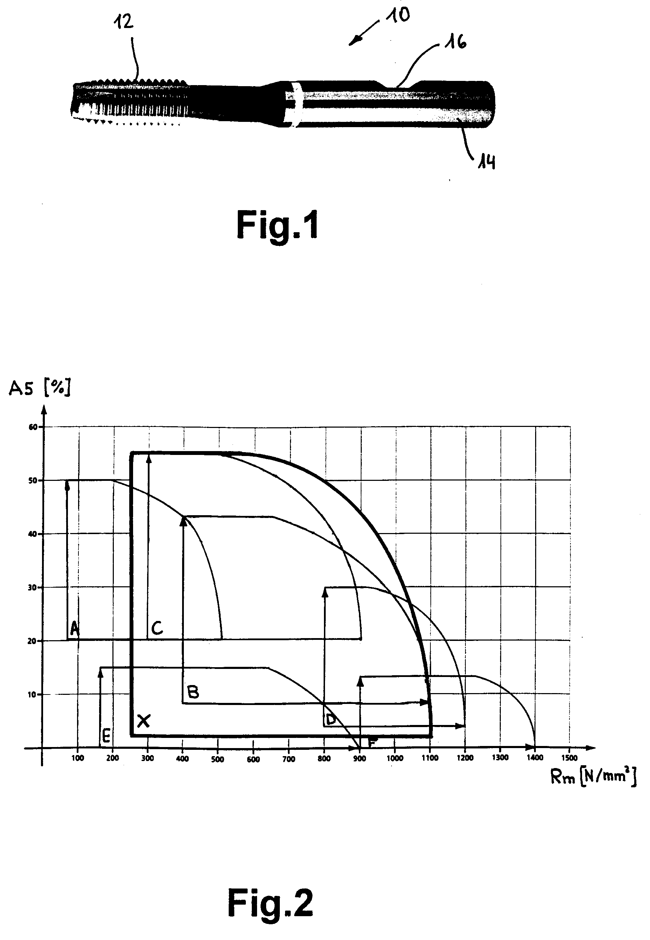

Ein in Fig. 1 gezeigter Gewindebohrer 10 weist einen an einem Schaft 14 festgelegten Schneidteil 12 auf. Seitlich am Schaft 14 ist eine Ausnehmung als Seitenspannfläche 16 angeordnet. Schaft 14 und Seitenspannfläche 16 sind bevorzugt nach DIN 1835 B ausgestaltet.

Der Schneidteil 12 ist beispielsweise aus einem pulvermetallurgisch hergestellten Hochleistungsschnellstahl gefertigt. Dadurch werden Produktionssicherheit und Lebensdauer gesteigert. Zur Optimierung der Abriebfestigkeit ist der Schneidteil beispielsweise mit einer TiCN-Beschichtung versehen. Eine derartige Hartstoffbeschichtung erlaubt erhöhte Schnittgeschwindigkeiten.

Der Schneidteil 12 des in Fig. 1 dargestellten Gewindebohrers 10 ist mit Schälnuten versehen und ist für durchgehende Bohrungen geeignet. Zur Herstellung von Sacklochbohrungen wird ein Gewindebohrer 10 eingesetzt, dessen Schneidteil 12 spiralte Nuten aufweist.

Der Gewindebohrer 10 wird in üblicher Weise in eine Spindel einer in der Zeichnung nicht dargestellten CNC-Maschine eingespannt.

Im Diagramm von Fig. 2 sind die Einsatzbereiche A bis F für verschiedene selbstführende Gewindebohrer mit entsprechend individuell angepasster Schneidgeometrie dem Einsatzbereich X des erfindungsgemässen Gewindebohrers für den universellen Einsatz gegenübergestellt.

Auf den Koordinaten des Diagramms sind die verschiedene Werkstoffkategorien charakterisierenden Werte für die Zugfestigkeit Rm und Bruchdehnung A5 aufgeführt.

Die Einsatzbereiche, für die jeweils ein eigener Gewindebohrer herkömmlicher Art erforderlich ist, können wie folgt charakterisiert werden:
A weiche langspanige Werkstoffe wie Al, Baustahl unlegiert
B langspanige Stahl-Werkstoffe
C rost-, säure- und hitzebeständige Stähle
D hochfeste Stähle
E kurzspanige, spröde Werkstoffe wie GG, GGG, Bronze etc.
F Titanlegierungen

Aus dem Diagramm ist ohne weiteres erkennbar, dass sich der Einsatzbereich X des erfindungsgemässen Gewindebohrers über praktisch alle Werkstoffkategorien erstreckt.

Während für verschiedene Werkstoffkategorien jeweils ein zugehöriger Gewindebohrer herkömmlicher Art mit entsprechendem Einsatzbereich A, B, C, D, E, F und entsprechend angepasster Schneidgeometrie bereitgestellt werden muss, ist der erfindungsgemässe Gewindebohrer in einem die verschiedenen individuellen Werkstoffkategorien überdeckenden Bereich X universell einsetzbar.

## Patentansprüche

1. Gewindebohrer mit einem Schneidteil (12) und einer an einem Schaft (14) angeordneten Spannfläche (16) zum Einspannen in eine Spindel einer Bearbeitungsmaschine,
dadurch gekennzeichnet, dass
für den Einsatz des Gewindebohrers auf Maschinen mit synchronisiertem Spindelantrieb der Schneidteil (12) eine zur Bearbeitung verschiedener Materialien mit unterschiedlicher Zugfestigkeit (Rm) und Bruchdehnung (A5) angepasste einheitliche Schneidgeometrie aufweist.

2. Gewindebohrer nach Anspruch 1, dadurch gekennzeichnet, dass die Spannfläche (16) eine Seitenspannfläche ist.

3. Gewindebohrer nach Anspruch 1 oder 2, dadurch gekennzeichnet, dass zumindest der Schneidteil (12) aus einem Hartmetall oder aus einem Hochleistungsschnellstahl gefertigt ist.

4. Gewindebohrer nach Anspruch 3, dadurch gekennzeichnet, dass das Hartmetall oder der Hochleistungsschnellstahl auf pulvermetallurgischem Weg gefertigt ist.

5. Gewindebohrer nach Anspruch 3 oder 4, dadurch gekennzeichnet, dass zumindest der Schneidteil (12) zur Erhöhung seiner Verschleissfestigkeit eine Hartstoffbeschichtung aufweist.

6. Gewindebohrer nach Anspruch 5, dadurch gekennzeichnet, dass die Hartstoffbeschichtung aus TiN, TiCN oder TiAlCN ist.

7. Verfahren zum Schneiden eines Gewindes mit einem in einer Spindel einer Bearbeitungsmaschine eingespannten Gewinderbohrer (10), dadurch gekennzeichnet, dass der Schneidteil (12) des Gewindebohrers (10) eine zur Bearbeitung verschiedener Materialien mit unterschiedlicher Zugfestigkeit (Rm) und Bruchdehnung (A5) angepasste einheitliche Schneidgeometrie aufweist und das Schneiden des Gewindes auf einer Maschine mit synchronisiertem Spindelantrieb durchgeführt wird.

8. Verwendung eines Gewindebohrers nach einem der Ansprüche 1 bis 6 auf CNC-Maschinen mit synchronisiertem Spindelantrieb zur Bearbeitung verschiedener Materialien mit unterschiedlicher Zugfestigkeit (Rm) und Bruchdehnung (A5).
